# EUROPEAN PATENT APPLICATION

(11) **EP 4 807 952 A1**
(43) Date of publication of application: **16.09.2026**
(21) Application number: 26157142.6
(22) Date of filing: 09.02.2026
(51) Int. Cl.: H02K 5/04, H02K 16/00, H02K 7/116, H02K 11/33, H02K 9/19, H02K 5/22, B60K 11/02, F16H 57/04

(54) **POWERTRAIN AND ELECTRIC VEHICLE**

(30) Priority: 12.03.2025 CN 202510293999
(71) Applicant: Huawei Technologies Co., Ltd., Shenzhen, Guangdong 518129 (CN)
(72) Inventor: GUO, Binxin, Shenzhen, 518129 (CN); ZHANG, Weilong, Shenzhen, 518129 (CN); CHEN, Xiaoguo, Shenzhen, 518129 (CN); CUI, Fangcheng, Shenzhen, 518129 (CN); ZHOU, Hao, Shenzhen, 518129 (CN)
(74) Representative: Isarpatent

(57) **Abstract**

This application provides a powertrain and an electric vehicle. A housing of the powertrain includes a motor container, a motor control unit container, a first recess, and a second recess. The motor container is configured to accommodate a stator and a rotor of a drive motor. The motor control unit container, the first recess, and the second recess are sequentially arranged on a circumferential wall of the motor container in a circumferential direction of the drive motor. An orientation of an opening of the motor control unit container, an orientation of an opening of the first recess, and an orientation of an opening of the second recess face away from an inner cavity of the motor container. The first recess and the second recess are respectively configured to detachably connect to a first oil pan and a second oil pan to form a first oil cavity and a second oil cavity. The first oil cavity and the second oil cavity are configured to connect the motor container and an oil pump when the powertrain is located at different circumferential positions, so that it can be ensured that the powertrain has a small size to adapt to small layout space when the powertrain selects the first oil cavity or the second oil cavity as an oil storage cavity in adaptation to the different circumferential positions, thereby improving adaptability of the powertrain in the vehicle.

## Description

### TECHNICAL FIELD

This application relates to the field of electric vehicle technologies, and in particular, to a powertrain and an electric vehicle.

### BACKGROUND

A powertrain requires an oil pump to pump oil stored in an oil storage cavity of the powertrain into an internal flow passage of a housing, so that the oil can cool a drive motor and lubricate a reducer. However, when a layout of the powertrain in a vehicle is limited by space, a mounting position of the powertrain needs to be adjusted. The oil storage cavity generally needs to be arranged at a lower position, which limits the layout of the powertrain. When different oil storage cavities are designed to adapt to different arrangement positions, space in a radial direction of the powertrain is occupied, resulting in a large overall size of the powertrain.

### SUMMARY

This application provides a powertrain and an electric vehicle, to ensure that the powertrain has a small size when the powertrain uses different oil cavities to adapt to different circumferential positions.

According to a first aspect, this application provides a powertrain. A housing of the powertrain includes a motor container, a motor control unit container, a first recess, and a second recess. The motor container is configured to accommodate a stator and a rotor of a drive motor. The motor control unit container is configured to accommodate a functional component of a motor control unit. The motor control unit container, the first recess, and the second recess are sequentially arranged on a circumferential wall of the motor container in a circumferential direction of the drive motor. An orientation of an opening of the motor control unit container, an orientation of an opening of the first recess, and an orientation of an opening of the second recess face away from an inner cavity of the motor container. The first recess and the second recess are respectively configured to detachably connect to a first oil pan and a second oil pan to form a first oil cavity and a second oil cavity. The first oil cavity and the second oil cavity are configured to connect the motor container and an oil pump when the powertrain is located at different circumferential positions of the powertrain.

In this embodiment of this application, the motor control unit container, the first recess, and the second recess are sequentially arranged on the circumferential wall of the motor container in the circumferential direction of the drive motor, so that the motor control unit container, the first recess, and the second recess can fully use space outside the circumferential wall of the motor container, thereby making the housing compact in structure and small in size. This contributes to miniaturization of the powertrain.

In this embodiment of this application, the orientation of the opening of the motor control unit container, the orientation of the opening of the first recess, and the orientation of the opening of the second recess face away from the inner cavity of the motor container. This facilitates formation of the motor control unit container, the first recess, and the second recess from the housing, and also helps provide the first recess and the second recess with larger space for storing oil. The first recess and the second recess can further be conveniently detachably connected to the first oil pan and the second oil pan, respectively, to form the first oil cavity and the second oil cavity.

In this embodiment of this application, the first oil cavity and the second oil cavity are configured to connect the motor container and the oil pump when the powertrain is located at the different circumferential positions of the powertrain. When the first oil cavity is located at a bottom position of the powertrain in the circumferential direction of the drive motor, the first oil cavity is configured to connect the motor container and the oil pump. The first oil cavity receives oil from the motor container, and the oil pump can pump oil in the first oil cavity into an internal flow passage of the housing. When the second oil cavity is located at the bottom position of the powertrain in the circumferential direction of the drive motor, the second oil cavity is configured to connect the motor container and the oil pump. The second oil cavity receives oil from the motor container, and the oil pump can pump oil in the second oil cavity into the internal flow passage of the housing. In this embodiment of this application, the first oil cavity and the second oil cavity are configured to connect the motor container and the oil pump when the powertrain is located at the different circumferential positions of the powertrain, so that an oil passage in the housing of the powertrain can be compatible with circulation of the oil passage when the powertrain is located at the different circumferential positions, thereby improving compatibility and flexibility of the powertrain in a vehicle layout.

Because the motor control unit container with a larger size is arranged on the circumferential wall of the motor container, the powertrain has a large size in a direction perpendicular to an axial direction of the drive motor at a position of the motor control unit container. In this case, the powertrain arranged in the vehicle at different circumferential angles needs to occupy larger space of a vehicle, and mounting of the powertrain in the vehicle is limited. In this embodiment of this application, the first recess and the second recess are respectively configured to detachably connect to the first oil pan and the second oil pan to form the first oil cavity and the second oil cavity. In this way, when the first oil cavity serves as the oil storage cavity, the second oil pan can be removed, and when the second oil cavity serves as the oil storage cavity, the first oil pan can be removed, so that the powertrain in two states can have a small size in the circumferential direction of the drive motor, and it can further be ensured that the powertrain has a small size to adapt to small layout space when the powertrain adapts to the different circumferential positions. This helps improve adaptability of the powertrain in the vehicle.

In this embodiment of this application, the motor control unit container, the first recess, and the second recess are sequentially arranged on the circumferential wall of the motor container in the circumferential direction of the drive motor, so that the motor control unit container, the first recess, and the second recess can fully use the space of the circumferential wall of the motor container, the orientation of the opening of the motor control unit container, the orientation of the opening of the first recess, and the orientation of the opening of the second recess face away from the inner cavity of the motor container, and the motor control unit container, the first recess, and the second recess have larger sizes. The first recess and the second recess are further conveniently detachably connected to the first oil pan and the second oil pan, respectively, to form the first oil cavity and the second oil cavity. In addition, when the powertrain uses the first oil cavity or the second oil cavity as the oil storage cavity, a detachable mounting manner of the first oil pan and the second oil pan allows an oil pan corresponding to the other oil cavity that does not serve as the oil storage cavity to be removed, so that it can further be ensured that the powertrain has a small size to adapt to the small layout space when the powertrain adapts to the different circumferential positions, thereby improving the adaptability of the powertrain in the vehicle.

In an embodiment, the motor control unit container and the second recess are arranged on two sides of the motor container in a radial direction of the drive motor.

In this embodiment of this application, the motor control unit container and the second recess are arranged on the two sides of the motor container in the radial direction of the drive motor. In this way, when a size of the housing of the powertrain increases in the radial direction of the drive motor at the position of the motor control unit container due to integration of the motor control unit container, the second oil pan detachably connected to the second recess can be removed, so that the size of the powertrain is small, thereby facilitating a layout of the powertrain in the vehicle.

In this embodiment of this application, the motor control unit container and the second recess are arranged on the two sides of the motor container in the radial direction of the drive motor, and the motor control unit container, the first recess, and the second recess are sequentially arranged on the circumferential wall of the motor container in the circumferential direction of the drive motor. In this way, the first recess can be arranged between the motor control unit container and the second recess in the circumferential direction of the drive motor. This facilitates arrangement of the first recess by using a gap between the motor control unit container and the motor container, making a structure of the housing compact. This further facilitates the arrangement of the first recess without excessively occupying space of the housing, contributes to the miniaturization of the powertrain, and facilitates a layout.

In an embodiment, in the radial direction of the drive motor, a depth of the second recess is less than a depth of the first recess.

In this embodiment of this application, the motor control unit container, the first recess, and the second recess are sequentially arranged on the circumferential wall of the motor container in the circumferential direction of the drive motor, and in the radial direction of the drive motor, the depth of the second recess is less than the depth of the first recess. In this way, the shallow depth of the second recess allows the powertrain to have a small size in an arrangement direction of the motor control unit container and the second recess.

In this embodiment of this application, when the motor control unit container and the second recess are arranged on the two sides of the motor container in the radial direction of the drive motor, the size of the powertrain may increase in the radial direction of the drive motor at a position at which the motor control unit container and the second recess are arranged. In this case, setting the depth of the second recess to be shallower helps avoid an increase in the size of the powertrain in the arrangement direction of the motor control unit container and the second recess.

In this embodiment of this application, the depth of the first recess in the radial direction of the drive motor is deeper, so that the first recess can accommodate more oil when serving as a part of the first oil cavity, which helps design the first oil pan detachably connected to the first recess to be flatter, space of the housing in the radial direction of the drive motor is not additionally increased during mounting of the first oil pan, and the size of the powertrain is small, thereby facilitating the layout of the powertrain in the vehicle.

In an embodiment, the second oil pan is recessed away from the motor container to form a third recess, and the third recess is configured to enclose the second recess to form the second oil cavity.

In this embodiment of this application, the second oil pan is recessed away from the motor container. In this case, the second oil pan increases space of the powertrain in the radial direction of the drive motor. When the first oil cavity serves as the oil storage cavity, the deeper second oil pan can be removed, so that size of the powertrain in a direction perpendicular to the axial direction of the drive motor can be smaller, and the layout of the powertrain in the vehicle is optimized.

In this embodiment of this application, the second oil pan is recessed away from the motor container to form the third recess, and the third recess is configured to enclose the second recess to form the second oil cavity. In this way, when the second oil cavity serves as the oil storage cavity, the third recess can be used to accommodate a larger amount of oil, to ensure that the oil pump can pump enough oil into the housing of the powertrain for cooling and lubrication circulation.

In an embodiment, in the radial direction of the drive motor, a depth of the third recess is greater than the depth of the second recess.

In this embodiment of this application, in the radial direction of the drive motor, the depth of the third recess is greater than the depth of the second recess. In this way, when the second oil cavity does not serve as the oil storage cavity, the third recess with the deeper depth can be removed, so that space of the powertrain in the direction perpendicular to the axial direction of the drive motor can be greatly reduced, the size of the powertrain is smaller, and the layout of the powertrain in the vehicle is optimized.

In this embodiment of this application, the second recess has the shallow depth, so that the second recess does not occupy excessive space of the housing in the radial direction of the drive motor. This helps reduce the size of the powertrain.

In an embodiment, the first recess includes a first side wall and a second side wall. The second recess, the second side wall, and the first side wall are sequentially arranged in the circumferential direction of the drive motor. The first side wall is configured to form a part of a bottom of the motor control unit container.

In this embodiment of this application, the second recess, the second side wall, and the first side wall are sequentially arranged in the circumferential direction of the drive motor. The first side wall is configured to form the part of the bottom of the motor control unit container. The first side wall of the first recess is reused to form the part of the bottom of the motor control unit container, so that the housing of the powertrain is more compactly arranged. When the second oil cavity serves as the oil storage cavity, after the first oil pan is removed, the first recess does not occupy additional space of the housing, so that the size of the powertrain is smaller.

In this embodiment of this application, the first side wall is configured to form the part of the bottom of the motor control unit container, so that the first recess can further provide support for the motor control unit container. This helps improve stability of the housing.

In an embodiment, the first recess is further configured to accommodate a three-phase wiring component, and the three-phase wiring component is configured to connect a stator winding of the drive motor to a power module of the motor control unit.

In this embodiment of this application, the first recess is further configured to accommodate the three-phase wiring component. The first recess is reused to accommodate the three-phase wiring component, so that the powertrain is compactly arranged. This further helps reduce the size of the housing and the powertrain. When the first oil cavity serves as the oil storage cavity, the three-phase wiring component in the first recess may be immersed in oil to cool the three-phase wiring component, so that no separate cooling structure needs to be disposed to dissipate heat for the three-phase wiring component. This helps simplify a structural design.

In this embodiment of this application, the three-phase wiring component is configured to connect the stator winding of the drive motor to the power module of the motor control unit. The three-phase wiring component may transmit an alternating current output by the power module of the motor control unit to the stator winding of the drive motor, to drive the rotor to rotate.

In an embodiment, the first recess is further configured to accommodate a three-phase connector of the stator winding, so that the alternating current transmitted by the three-phase wiring component can be transmitted to the stator winding through the three-phase connector, to drive the rotor to rotate. When the first oil cavity serves as the oil storage cavity, the three-phase connector may also be immersed in oil to dissipate heat for the three-phase connector, so that no separate cooling structure needs to be disposed to dissipate heat for the three-phase connector. This helps simplify the structural design.

In an embodiment, a third side wall of the first recess that faces an opening of the motor container in the axial direction of the drive motor includes a cable outlet. The cable outlet connects the motor container and the first recess. The cable outlet is configured to accommodate the three-phase wiring component and the three-phase connector, so that the alternating current output by the power module can be transmitted to the stator winding through the three-phase wiring component and the three-phase connector along a shorter path.

In an embodiment, the first side wall includes a three-phase hole. The three-phase hole communicates the first recess with the motor control unit container. The three-phase hole is used for a three-phase copper bar to pass through. The three-phase copper bar is configured to connect the power module to the three-phase wiring component.

In this embodiment of this application, the first side wall includes the three-phase hole. The three-phase hole communicates the first recess with the motor control unit container. The three-phase hole is used for the three-phase copper bar to pass through. The first recess is configured to accommodate the three-phase wiring component, so that the three-phase copper bar can be connected to the three-phase wiring component in the first recess through a shorter path, thereby improving structural compactness of the powertrain. When the first oil cavity serves as the oil storage cavity, a part of the three-phase copper bar extending into the first recess may be directly cooled by oil stored in the first recess, so that no separate cooling structure needs to be disposed to dissipate heat for the three-phase copper bar. This helps simplify the structural design and contributes to the miniaturization of the powertrain.

In this embodiment of this application, the three-phase copper bar is configured to connect the power module to the three-phase wiring component. The three-phase copper bar may transmit a three-phase alternating current transmitted by the power module of the motor control unit to the three-phase wiring component, and the three-phase wiring component transmits the alternating current to the stator winding of the drive motor, to drive the rotor to rotate.

In an embodiment, the first side wall includes a signal hole. The signal hole communicates the first recess with the motor control unit container. The signal hole is used for a signal cable to pass through. The signal cable is configured to connect a circuit board of the motor control unit to a resolver.

In this embodiment of this application, the first side wall further includes the signal hole. The signal hole communicates the first recess with the motor control unit container. The signal hole is used for the signal cable to pass through, so that both the signal cable and the three-phase copper bar are arranged on the first side wall, making wiring of the powertrain compact. This helps improve integration of the powertrain and reduce the size of the powertrain.

In this embodiment of this application, the signal cable is configured to connect the circuit board of the motor control unit and the resolver. The resolver may be configured to detect rotational speed information of the rotor of the drive motor, and transmit the rotational speed information of the rotor to the circuit board of the motor control unit through the signal cable, so that the motor control unit can adjust and control a rotational status of the rotor of the drive motor.

In an embodiment, in the circumferential direction of the drive motor, a width of the first recess is greater than a width of the second recess.

In this embodiment of this application, in the circumferential direction of the drive motor, the width of the first recess is greater than the width of the second recess. The first recess is reused to accommodate the three-phase wiring component, and space for accommodating oil in the first recess is occupied, and therefore, the width of the first recess needs to be set larger. When the first oil cavity serves as the oil storage cavity, the size of the first recess is large enough to accommodate enough oil and the three-phase wiring component.

In this embodiment of this application, the first side wall of the first recess is configured to form the part of the bottom of the motor control unit container, so that the arrangement of the first recess can use large triangular space between the bottom of the motor control unit container and the circumferential wall of the motor container to form a large size without occupying additional space of the housing, thereby facilitating setting of a larger width for the first recess.

In an embodiment, the housing further includes an oil suction hole, and the oil suction hole is exposed within the first recess. Under an operating condition in which the first oil cavity is configured to communicate with the oil pump, the oil suction hole is configured to communicate with the oil pump through the internal flow passage of the housing. Under an operating condition in which the second oil cavity is configured to communicate with the oil pump, the oil suction hole is configured to communicate with the oil pump through the internal flow passage of the housing and communicate with the second recess through an external pipe.

In this embodiment of this application, under the operating condition in which the first oil cavity is configured to communicate with the oil pump, the oil suction hole is configured to communicate with the oil pump through the internal flow passage of the housing. The oil suction hole is exposed within the first recess. The first recess is configured to detachably connect to the first oil pan to form the first oil cavity, so that the oil pump can directly draw in oil from the first oil cavity through the oil suction hole in the first recess and pump oil into the internal flow passage of the housing. The oil suction hole is exposed within the first recess, so that an oil path is shorter, system oil resistance is reduced, and operating load of the oil pump is reduced.

In this embodiment of this application, under the operating condition in which the second oil cavity is configured to communicate with the oil pump, the oil suction hole is configured to communicate with the oil pump through the internal flow passage of the housing and communicate with the second recess through the external pipe, so that oil in the second oil cavity can enter the internal flow passage of the housing through the external pipe and the oil suction hole, and then is pumped by the oil pump to the drive motor, to cool and lubricate the drive motor.

In an embodiment, in the radial direction of the drive motor, a distance from the oil suction hole to the opening of the first recess is less than a distance from the oil suction hole to an inner wall of the motor container.

In this embodiment of this application, in the radial direction of the drive motor, the distance from the oil suction hole to the opening of the first recess is less than the distance from the oil suction hole to the inner wall of the motor container, so that the oil suction hole is closer to the opening of the first recess. Under the operating condition in which the first oil cavity is configured to communicate with the oil pump, the first recess is located at the bottom of the powertrain. In this way, the oil suction hole can be located at a lower position of the powertrain, so that the oil pump can quickly pump oil in the first recess through the oil suction hole into the internal flow passage of the housing in a timely manner, thereby avoiding oil accumulation in the first recess.

In an embodiment, in the circumferential direction of the drive motor, the oil suction hole is distributed at a center of the opening of the first recess.

In this embodiment of this application, in the circumferential direction of the drive motor, the oil suction hole is distributed at the center of the opening of the first recess. In this way, when the powertrain tilts forward and backward, it can be ensured that the oil suction hole can still draw in oil from the first recess, thereby preventing the oil pump from dry suction, ensuring normal operation of the powertrain, and avoiding a failure of cooling and lubrication system of the powertrain.

In an embodiment, the housing includes two motor containers. Openings of the two motor containers face away from each other in the axial direction of the drive motor. The oil suction hole is equidistant from the openings of the two motor containers in the axial direction of the drive motor. In this way, when the powertrain tilts leftward or rightward, it can be ensured that the oil suction hole can still draw in oil from the first recess, thereby preventing the oil pump from dry suction, ensuring normal operation of the powertrain, and avoiding the failure of the cooling and lubrication system of the powertrain.

In an embodiment, a bottom of the first recess further includes an oil suction protrusion. The oil suction protrusion protrudes toward the opening of the first recess. The oil suction hole is provided on the oil suction protrusion.

In this embodiment of this application, the oil suction protrusion protrudes toward the opening of the first recess, and the oil suction hole is provided on the oil suction protrusion, so that the oil suction hole can be closer to the opening of the first recess, and the oil suction hole can be arranged at a lower position in a height direction of the powertrain. This helps improve efficiency of the oil pump in drawing oil from the oil suction hole.

In this embodiment of this application, the oil suction protrusion further functions as a reinforcement rib. This helps improve structural strength of the housing.

In an embodiment, the oil suction hole is distributed at one end that is of oil suction protrusion and that faces the opening of first recess.

In an embodiment, the housing further includes a first communication hole and a second communication hole. The first communication hole and the second communication hole are respectively configured to communicate with the first recess and the second recess. Under the operating condition in which the second oil cavity is configured to communicate with the oil pump, the second communication hole is further configured to detachably connect to one end of the external pipe, and the other end of the external pipe passes through the first communication hole to communicate with the oil suction hole.

In this embodiment of this application, under the operating condition in which the second oil cavity is configured to communicate with the oil pump, the second communication hole is further configured to detachably connect to one end of the external pipe, and the other end of the external pipe passes through the first communication hole to communicate with the oil suction hole. In this way, oil in the second oil cavity can be transferred from the second communication hole to one end of the external pipe, and transferred from the other end of the external pipe to the first communication hole to enter the oil suction hole, and then enters the internal flow passage of the housing.

In this embodiment of this application, the second communication hole is further configured to detachably connect to one end of the external pipe, and the other end of the external pipe passes through the first communication hole to communicate with the oil suction hole. When the first oil cavity serves as the oil storage cavity, the external pipe can be removed to reduce a size.

In an embodiment, under the operating condition in which the first oil cavity is configured to communicate with the oil pump, the housing further includes an oil drain plug. The oil drain plug is configured to block the first communication hole, so that oil in the first oil cavity does not leak from the first communication hole, thereby ensuring reliability of the powertrain for cooling and lubricating the oil passage.

In an embodiment, oil in the powertrain may be further discharged by opening the oil drain plug, to replace oil in the powertrain. In an embodiment, the oil drain plug is threadedly connected to the inside of the first communication hole.

In an embodiment, a radial sealing structure between the other end of the external pipe and the first communication hole is the same as a radial sealing structure between the oil drain plug and first communication hole, so that the other end of the external pipe can be radially sealed with the first communication hole after the oil drain plug is removed from the first communication hole. In other words, the radial sealing structure of the first communication hole can adapt to both the oil drain plug and the other end of the external pipe.

In an embodiment, under the operating condition in which the second oil cavity is configured to communicate with the oil pump, one end of the external pipe and the second communication hole are radially sealed. When the first oil cavity serves as the oil storage cavity, after the oil drain plug is removed, the first communication hole can be connected to and end-face sealed with the other end of the external pipe. The other end of the external pipe further passes through a threaded hole for placing the oil drain plug and is assembled and radially sealed with the oil suction hole, thereby ensuring the reliability of the powertrain for cooling and lubricating the oil passage.

In another embodiment, the other end of the external pipe communicates with the oil suction hole through an oil guide pipe. The oil guide pipe is detachably connected to the other end of the external pipe and the oil suction hole. A pipe diameter of the oil guide pipe is the same as a hole diameter of the oil suction hole, so that the oil guide pipe can smoothly transfer oil to the oil suction hole.

In an embodiment, under the operating condition in which the first oil cavity is configured to communicate with the oil pump, when the powertrain is placed in a tilted manner and the oil suction hole cannot be located at a lowest position of the powertrain, an oil suction pipe can be mounted at a position of the oil suction hole, one end of the oil suction pipe is inserted into the oil suction hole, and the other end of the oil suction pipe is located at a lowest position of the first oil cavity. In this way, it is ensured that the cooling and lubrication system of the powertrain does not fail.

In an embodiment, the oil suction hole, the first communication hole, and the second communication hole are sequentially spaced apart in the circumferential direction of the drive motor.

In this embodiment of this application, the oil suction hole, the first communication hole, and the second communication hole are sequentially spaced apart in the circumferential direction of the drive motor. In this way, under the operating condition in which the second oil cavity is configured to communicate with the oil pump, oil in the second oil cavity can flow in the circumferential direction of the drive motor, making a length of the external pipe shorter. A shorter oil passage helps reduce the system oil resistance and reduce load on the oil pump. It further facilitates a connection of the oil suction hole, the first communication hole, and the second communication hole through the external pipe, mounting of the external pipe, and more compact arrangement between the external pipe and the housing.

In an embodiment, the first communication hole is distributed on a part of a wall of the first recess forming the first oil cavity or distributed on the first oil pan, and the second communication hole is distributed on a part of a wall of the second recess forming the second oil cavity or distributed on the second oil pan.

In this embodiment of this application, the first communication hole is distributed on the part of the wall of the first recess forming the first oil cavity. In this way, when the first communication hole is connected to the other end of the external pipe, the external pipe can be arranged closer to the housing, thereby making arrangement between the external pipe and the housing more compact.

In this embodiment of this application, the first communication hole is distributed on the first oil pan forming the first oil cavity, so that the other end of the external pipe is more smoothly connected to the first communication hole.

In this embodiment of this application, the second communication hole is distributed on the part of the wall of the second recess forming the second oil cavity. In this way, when the second communication hole is connected to one end of the external pipe, the external pipe is arranged closer to the housing, thereby making the arrangement between the external pipe and the housing more compact.

In this embodiment of this application, the second communication hole is distributed on the second oil pan forming the second oil cavity, so that one end of the external pipe is more smoothly connected to the second communication hole.

In an embodiment, the first communication hole is distributed on the second side wall of the first recess forming the first oil cavity, and the second communication hole is distributed on the second oil pan forming the second oil cavity.

In an embodiment, the housing further includes a first oil return hole. The first oil return hole penetrates the bottom of the first recess. The first oil return hole is configured to communicate the first recess with the motor container. Under the operating condition in which the first oil cavity is configured to communicate with the oil pump, the first oil cavity is located at the bottom of the powertrain, and the first oil return hole is located at a position close to a bottom of the motor container, so that oil in the motor container can quickly flow back from the first oil return hole to the first oil cavity.

In an embodiment, the housing further includes a plurality of second oil return holes. The second oil return hole penetrates a bottom of the second recess. The second oil return hole is configured to connect the second recess and the motor container. Under the operating condition in which the second oil cavity is configured to communicate with the oil pump, the second oil cavity is located at the bottom of the powertrain, and the second oil return hole is located at a position close to the bottom and the opening of the motor container, so that oil in the motor container can quickly flow back from the second oil return hole to the second oil cavity.

In an embodiment, when the first oil cavity is located at the bottom of the powertrain and serves as the oil storage cavity, the second oil pan is removed, and a flat cover plate is fastened to and covers the second recess, so that oil in the motor container can be prevented from leaking after entering the second recess through the second oil return hole. In addition, the flat cover plate does not additionally increase the size of the powertrain. This contributes to the miniaturization of the powertrain.

In an embodiment, the powertrain further includes a reducer, a filter, and a heat exchanger. Oil drawn into the oil pump through the oil suction hole flows sequentially through the filter and the heat exchanger via the internal flow passage of the housing. The filter is configured to remove contaminants from oil. The heat exchanger is configured to exchange heat with oil. Oil transferred from the heat exchanger is further transferred to the drive motor and the reducer to cool and lubricate the drive motor and the reducer, and then flows back to the first oil cavity or the second oil cavity through the first oil return hole or the second oil return hole, thereby implementing the circulation of the oil. The oil pump, the filter, and the heat exchanger are disposed around an outer side wall of the motor container in the circumferential direction of the drive motor, so that the oil pump, the filter, and the heat exchanger do not occupy excessive circumferential space of the powertrain.

In addition, the reducer in this embodiment of this application is a planetary reducer. In comparison with a parallel shaft reducer, the planetary reducer has a small difference in radial lengths at various angles in a circumferential direction, and the planetary reducer is approximately circular. Therefore, two oil cavities, namely the first oil cavity and the second oil cavity, increase the size of the powertrain in a radial direction. In this application, the motor control unit container, the first recess, and the second recess are disposed in the circumferential direction of the drive motor, and the first oil pan and the second oil pan are detachably connected to the first recess and the second recess to form the first oil cavity and the second oil cavity. In this way, when one of the oil cavities serves as the oil storage cavity, an oil pan of the other oil cavity can be removed, so that a radial size of the powertrain can be reduced when one of the oil cavities serves as the oil storage cavity.

In an embodiment, when the powertrain is arranged in a front-wheel-drive layout, a front-wheel-drive electric vehicle has a cockpit, and a size of the powertrain in a horizontal direction perpendicular to an axial direction of the powertrain needs to be small. Therefore, the second recess is arranged at the bottom of the powertrain, the second oil cavity serves as the oil storage cavity, and the second oil pan with the deeper depth may be arranged at the bottom of the powertrain by using a vehicle gap, without affecting a layout of the cockpit. The first recess is arranged in the horizontal direction perpendicular to the axial direction of the powertrain. The first recess is formed by using a gap between the motor control unit container and the motor container. The first recess does not additionally increase a size of the motor control unit container in the horizontal direction perpendicular to the axial direction of the powertrain, and the first oil pan is of a flat structure, so that the size of the powertrain in the horizontal direction perpendicular to the axial direction of the powertrain is small, and more space can be reserved for the layout of the cockpit.

When the powertrain is arranged in a rear-wheel-drive layout, a rear-wheel-drive electric vehicle has a trunk, and the size of the powertrain needs to be small in a height direction after the powertrain is arranged. Therefore, the first oil cavity serves as the oil storage cavity, and a stacking direction of the motor container and the motor control unit container are arranged in a horizontal direction. The first recess is formed by using space between the motor control unit container and the motor container. The first recess does not increase space of the housing and the powertrain in the height direction of the powertrain, and the first oil pan is of the flat structure, so that space of the powertrain in the height direction of the powertrain does not increase. In addition, the second oil cavity is arranged in the horizontal direction perpendicular to the axial direction of the powertrain, and the second oil pan can be removed without excessively increasing space of the powertrain in the horizontal direction perpendicular to the axial direction of the powertrain, so that more space can be reserved for a layout of the trunk.

According to a second aspect, this application provides an electric vehicle. The electric vehicle includes a vehicle frame and the powertrain according to the first aspect. The vehicle frame is configured to fasten the powertrain. A drive motor of the powertrain is configured to receive power supplied by a power battery and to drive a wheel.

According to the powertrain in this embodiment of this application, a motor control unit container, a first recess, and a second recess are sequentially arranged on a circumferential wall of a motor container in a circumferential direction of a drive motor, so that the motor control unit container, the first recess, and the second recess can fully use space of the circumferential wall of the motor container, and the powertrain has a small size when having two recesses for storing oil. An orientation of an opening of the motor control unit container, an orientation of an opening of the first recess, and an orientation of an opening of the second recess face away from an inner cavity of the motor container, and the first recess and the second recess are further conveniently detachably connected to a first oil pan and a second oil pan, respectively, to form a first oil cavity and a second oil cavity. In addition, when the powertrain uses one of the first oil cavity and the second oil cavity as an oil storage cavity, a detachable mounting manner of the first oil pan and the second oil pan allows an oil pan corresponding to the other oil cavity to be removed, so that it can further be ensured that the powertrain has a small size to adapt to small layout space when the powertrain adapts to different circumferential positions, thereby improving adaptability of the powertrain in the vehicle.

### BRIEF DESCRIPTION OF DRAWINGS

To describe the technical solutions in embodiments of this application more clearly, the following describes the accompanying drawings for describing embodiments of this application.
FIG. 1 is a diagram of an electric vehicle according to an embodiment of this application;
FIG. 2 is a diagram of a powertrain according to an embodiment of this application;
FIG. 3 is another diagram of a powertrain according to an embodiment of this application;
FIG. 4 is a diagram of a housing of a powertrain according to an embodiment of this application;
FIG. 5 is a diagram of a front-wheel-drive layout of a powertrain according to an embodiment of this application;
FIG. 6 is a diagram of a rear-wheel-drive layout of a powertrain according to an embodiment of this application;
FIG. 7 is another diagram of a housing of a powertrain according to an embodiment of this application; and
FIG. 8 is another diagram of a powertrain according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

This application provides a powertrain. A housing of the powertrain includes a motor container, a motor control unit container, a first recess, and a second recess. The motor container is configured to accommodate a stator and a rotor of a drive motor. The motor control unit container is configured to accommodate a functional component of a motor control unit. The motor control unit container, the first recess, and the second recess are sequentially arranged on a circumferential wall of the motor container in a circumferential direction of the drive motor. An orientation of an opening of the motor control unit container, an orientation of an opening of the first recess, and an orientation of an opening of the second recess face away from an inner cavity of the motor container. The first recess and the second recess are respectively configured to detachably connect to a first oil pan and a second oil pan to form a first oil cavity and a second oil cavity. The first oil cavity and the second oil cavity are configured to connect the motor container and an oil pump when the powertrain is located at different circumferential positions of the powertrain.

The motor control unit container, the first recess, and the second recess are sequentially arranged on the circumferential wall of the motor container in the circumferential direction of the drive motor, so that the motor control unit container, the first recess, and the second recess can fully use space of the circumferential wall of the motor container, and the powertrain has a small size when having two recesses for storing oil. The orientation of the opening of the motor control unit container, the orientation of the opening of the first recess, and the orientation of the opening of the second recess face away from the inner cavity of the motor container, so that the first recess and the second recess are conveniently detachably connected to the first oil pan and the second oil pan, respectively, to form the first oil cavity and the second oil cavity. In addition, when the powertrain uses one of the first oil cavity and the second oil cavity as an oil storage cavity, a detachable mounting manner of the first oil pan and the second oil pan allows an oil pan corresponding to the other oil cavity to be removed, so that it can be ensured that the powertrain has a small size to adapt to small layout space when the powertrain adapts to the different circumferential positions, thereby improving adaptability of the powertrain in a vehicle.

This application provides the powertrain, and the powertrain is used in an electric vehicle.

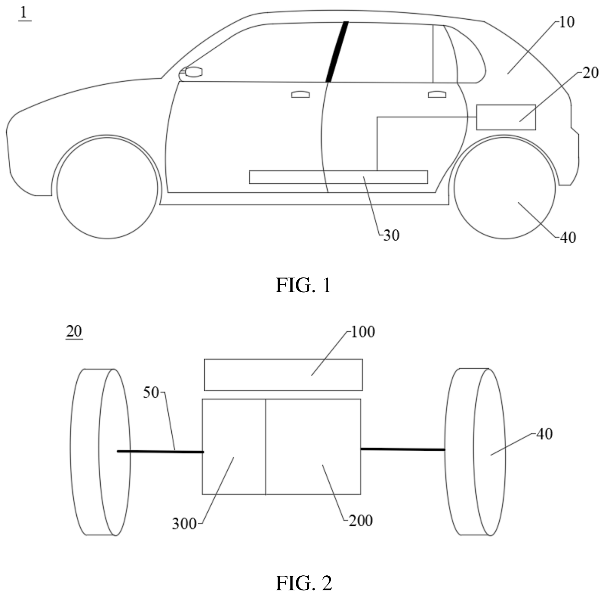

FIG. 1 is a diagram of an electric vehicle 1 according to an embodiment of this application.

In an embodiment, the electric vehicle 1 includes a vehicle frame 10, a powertrain 20, and a power battery 30. As shown in FIG. 1, the vehicle frame 10 is configured to fasten the powertrain 20 and the power battery 30. In this embodiment of this application, the electric vehicle 1 is a wheeled device driven or pulled by a power apparatus. In this embodiment of this application, the powertrain 20 is configured to receive power supplied by the power battery 30 to drive a wheel 40.

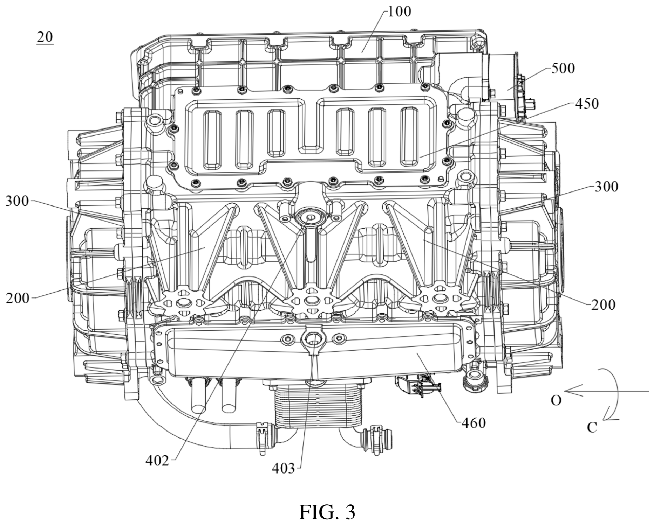

FIG. 2 is a diagram of the powertrain 20 according to an embodiment of this application. FIG. 3 is another diagram of the powertrain 20 according to an embodiment of this application.

In an embodiment, as shown in FIG. 2, the powertrain 20 includes a motor control unit 100, a drive motor 200, and a planetary reducer 300.

In this embodiment of this application, as shown in FIG. 2 and FIG. 3, the drive motor 200 includes a motor shaft (not shown in the figure), a stator (not shown in the figure), and a rotor (not shown in the figure), and the planetary reducer 300 includes a planetary gear set (not shown in the figure). The motor control unit 100 is configured to receive the power supplied by the power battery 30. The rotor in the drive motor 200 is fastened to and sleeved on the motor shaft. After receiving a current provided by the motor control unit 100, the stator drives the rotor to rotate, to drive the motor shaft to rotate. The motor shaft of the drive motor 200 is configured to: transfer kinetic energy to the planetary gear set of the planetary reducer 300, and transfer power to the wheel 40 through a half shaft 50, to drive the wheel 40 to rotate. The planetary gear set of the planetary reducer 300 includes a sun gear, a planetary gear, a planetary carrier, and a ring gear.

In an embodiment, as shown in FIG. 2 and FIG. 3, the powertrain 20 includes two drive motors 200 and two planetary reducers 300. The two planetary reducers 300 are respectively arranged on two sides of the two drive motors 200 in an axial direction O of the powertrain 20. The stator of each drive motor 200 is configured to: receive a current from the power battery 30 through the motor control unit 100 to rotate the rotor of the drive motor 200, and transfer power to one planetary reducer 300 through the motor shaft, to drive the wheel 40 on one side of the electric vehicle 1 to rotate. The two drive motors 200 and the two planetary reducers 300 respectively control running of wheels 40 on two sides of the electric vehicle 1.

The drive motor of the powertrain needs to be cooled and lubricated. An oil storage cavity may be disposed on an outer side of a housing of the drive motor, and the oil pump is used to achieve circulation of oil. To meet different layout states of front-wheel drive and rear-wheel drive of the powertrain, different oil storage cavities need to be disposed. However, the different oil storage cavities cause a large size of the powertrain, and cannot adapt to different mounting states of the powertrain.

In this application, the motor control unit container, the first recess, and the second recess are disposed in the circumferential direction of the drive motor, and the first oil pan and the second oil pan are detachably connected to the first recess and the second recess to form the first oil cavity and the second oil cavity. In this way, when one oil cavity serves as the oil storage cavity, an oil pan of the other oil cavity can be removed, so that the powertrain located at the different circumferential positions has the small size, thereby improving flexibility and compatibility of assembly of the powertrain in the vehicle and improving the adaptability of the powertrain.

The following describes in detail the powertrain 20 in embodiments of this application.

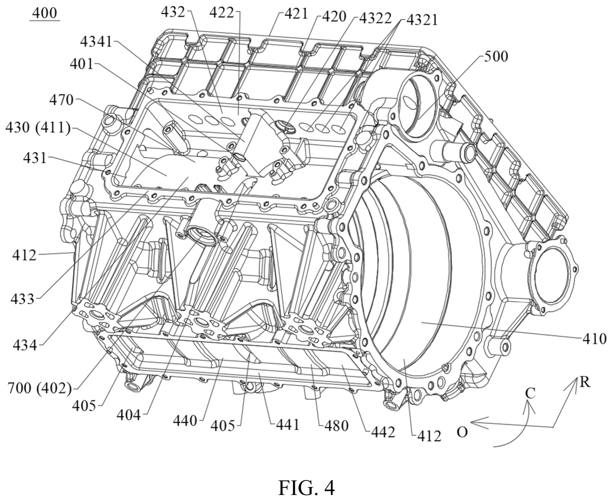

FIG. 4 is a diagram of a housing 400 of the powertrain 20 according to an embodiment of this application.

In an embodiment, as shown in FIG. 4, the housing 400 of the powertrain 20 includes a motor container 410, a motor control unit container 420, a first recess 430, and a second recess 440. The motor container 410 is configured to accommodate the stator and the rotor of the drive motor 200. The motor control unit container 420 is configured to accommodate the functional component of the motor control unit 100. The motor control unit container 420, the first recess 430, and the second recess 440 are sequentially arranged on a circumferential wall 411 of the motor container 410 in a circumferential direction C of the drive motor 200. An orientation of an opening 421 of the motor control unit container 420, an orientation of an opening 431 of the first recess 430, and an orientation of an opening 441 of the second recess 440 face away from an inner cavity of the motor container 410. As shown in FIG. 3 and the FIG. 4, the first recess 430 and the second recess 440 are respectively configured to detachably connect to a first oil pan 450 and a second oil pan 460 to form a first oil cavity 470 and a second oil cavity 480, and the first oil cavity 470 and the second oil cavity 480 are configured to connect the motor container 410 and an oil pump 500 when the powertrain 20 is located at different circumferential positions.

In this embodiment of this application, the motor control unit container 420, the first recess 430, and the second recess 440 are sequentially arranged on the circumferential wall 411 of the motor container 410 in the circumferential direction C of the drive motor 200, so that the motor control unit container 420, the first recess 430, and the second recess 440 can fully use space outside the circumferential wall 411 of the motor container 410, thereby making the housing 400 compact in structure and small in size. This contributes to miniaturization of the powertrain 20. The motor control unit container 420 is configured to enclose a motor control unit cover plate to form a motor control unit cavity, and the functional component of the motor control unit 100 is accommodated in the motor control unit cavity.

In this embodiment of this application, the orientation of the opening 421 of the motor control unit container 420, the orientation of the opening 431 of the first recess 430, and the orientation of the opening 441 of the second recess 440 face away from the inner cavity of the motor container 410. This facilitates formation of the motor control unit container 420, the first recess 430, and the second recess 440 from the housing 400, and also helps provide the first recess 430 and the second recess 440 with larger space for storing oil. The first recess 430 and the second recess 440 can further be conveniently detachably connected to the first oil pan 450 and the second oil pan 460, respectively, to form the first oil cavity 470 and the second oil cavity 480.

In this embodiment of this application, the first oil cavity 470 and the second oil cavity 480 are configured to connect the motor container 410 and the oil pump 500 when the powertrain 20 is located at the different circumferential positions of the powertrain 20. When the first oil cavity 470 is located at a bottom position of the powertrain 20 in the circumferential direction C of the drive motor 200, the first oil cavity 470 is configured to connect the motor container 410 and the oil pump 500. The first oil cavity 470 receives oil from the motor container 410, and the oil pump 500 can pump oil in the first oil cavity 470 into an internal flow passage of the housing 400. When the second oil cavity 480 is located at the bottom position of the powertrain 20 in the circumferential direction C of the drive motor 200, the second oil cavity 480 is configured to connect the motor container 410 and the oil pump 500. The second oil cavity 480 receives oil from the motor container 410, and the oil pump 500 can pump oil in the second oil cavity 480 into the internal flow passage of the housing 400. In this embodiment of this application, the first oil cavity 470 and the second oil cavity 480 are configured to connect the motor container 410 and the oil pump 500 when the powertrain 20 is located at the different circumferential positions of the powertrain 20, so that an oil passage in the housing 400 of the powertrain 20 can be compatible with circulation of the oil passage when the powertrain 20 is located at the different circumferential positions, thereby improving compatibility and flexibility of the powertrain 20 in a vehicle layout.

Because the motor control unit container 420 with a larger size is arranged on the circumferential wall 411 of the motor container 410, the powertrain 20 has a large size in a direction perpendicular to an axial direction O of the drive motor 200 at a position of the motor control unit container 420. In this case, the powertrain 20 arranged in the vehicle at different circumferential angles needs to occupy larger space of the vehicle, and mounting of the powertrain 20 in the vehicle is limited. In this embodiment of this application, the first recess 430 and the second recess 440 are respectively configured to detachably connect to the first oil pan 450 and the second oil pan 460 to form the first oil cavity 470 and the second oil cavity 480. In this way, when the first oil cavity 470 serves as the oil storage cavity, the second oil pan 460 can be removed, and when the second oil cavity 480 serves as the oil storage cavity, the first oil pan 450 can be removed, so that the powertrain 20 in two states can have a small size in the circumferential direction C of the drive motor 200, and it can further be ensured that the powertrain 20 has a small size to adapt to the small layout space when the powertrain 20 adapts to the different circumferential positions. This helps improve the adaptability of the powertrain 20 in the vehicle. The axial direction O of the drive motor 200 is the same as the axial direction O of the powertrain 20. In this embodiment of this application, the motor control unit container 420, the first recess 430, and the second recess 440 are sequentially arranged on the circumferential wall 411 of the motor container 410 in the circumferential direction C of the drive motor 200, so that the motor control unit container 420, the first recess 430, and the second recess 440 can fully use the space of the circumferential wall 411 of the motor container 410, the orientation of the opening 421 of the motor control unit container 420, the orientation of the opening 431 of the first recess 430, and the orientation of the opening 441 of the second recess 440 face away from the inner cavity of the motor container 410, and the motor control unit container 420, the first recess 430, and the second recess 440 have larger sizes. The first recess 430 and the second recess 440 are further conveniently detachably connected to the first oil pan 450 and the second oil pan 460, respectively, to form the first oil cavity 470 and the second oil cavity 480. In addition, when the powertrain 20 uses the first oil cavity 470 or the second oil cavity 480 as the oil storage cavity, a detachable mounting manner of the first oil pan 450 and the second oil pan 460 allows an oil pan corresponding to the other oil cavity that does not serve as the oil storage cavity to be removed, so that it can further be ensured that the powertrain 20 has a small size to adapt to the small layout space when the powertrain 20 adapts to the different circumferential positions, thereby improving the adaptability of the powertrain 20 in the vehicle.

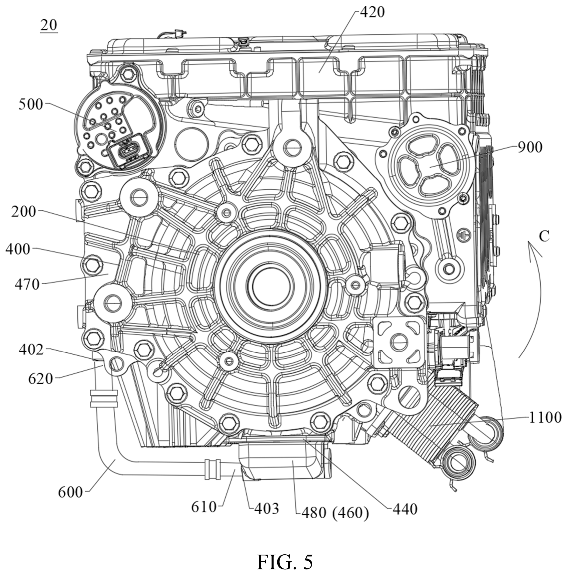

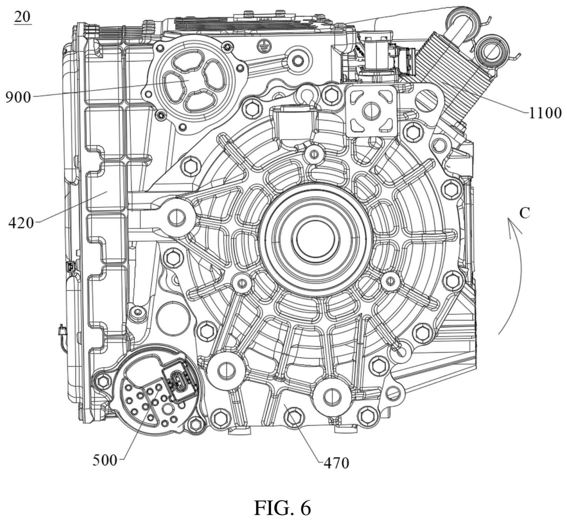

FIG. 5 is a diagram of a front-wheel-drive layout of the powertrain 20 according to an embodiment of this application. FIG. 6 is a diagram of a rear-wheel-drive layout of the powertrain 20 according to an embodiment of this application. The front-wheel-drive layout means that the powertrain 20 is connected to a front wheel 40 of the electric vehicle 1 through transmission, and in the front-wheel-drive layout, the powertrain 20 is disposed at the front of the electric vehicle 1. The rear-wheel-drive layout means that the powertrain 20 is connected to a rear wheel 40 of the electric vehicle 1 through transmission, and in the rear-wheel-drive layout, the powertrain 20 is disposed at the rear of the electric vehicle 1.

In an embodiment, as shown in FIG. 3 and FIG. 5, when the powertrain 20 is arranged in the front-wheel-drive layout, the second oil cavity 480 serves as the oil storage cavity and is located at the bottom of the powertrain 20, and the second oil pan 460 is fastened to the second recess 440. In this case, the first oil pan 450 that forms the first oil cavity 470 can be removed. As shown in FIG. 3 and FIG. 6, in another embodiment, when the powertrain 20 is arranged in the rear-wheel-drive layout, the first oil cavity 470 serves as the oil storage cavity and is located at the bottom of the powertrain 20, and the first oil pan 450 is fastened to the first recess 430. In this case, the second oil pan 460 that forms the second oil cavity 480 can be removed.

In an embodiment, as shown in FIG. 5 and FIG. 6, after the powertrain 20 in the front-wheel-drive layout is rotated by 90°, the powertrain 20 can be in a rear-wheel-drive layout state.

In an embodiment, as shown in FIG. 4, the motor control unit container 420 and the second recess 440 are arranged on two sides of the motor container 410 in a radial direction R of the drive motor 200.

In this embodiment of this application, as shown in FIG. 3 and FIG. 4, the motor control unit container 420 and the second recess 440 are arranged on the two sides of the motor container 410 in the radial direction R of the drive motor 200. In this way, when a size of the housing 400 of the powertrain 20 increases in the radial direction R of the drive motor 200 at the position of the motor control unit container 420 due to integration of the motor control unit container 420, the second oil pan 460 detachably connected to the second recess 440 can be removed, so that the size of the powertrain 20 is small, thereby facilitating a layout of the powertrain 20 in the vehicle.

In this embodiment of this application, the motor control unit container 420 and the second recess 440 are arranged on the two sides of the motor container 410 in the radial direction R of the drive motor 200, and the motor control unit container 420, the first recess 430, and the second recess 440 are sequentially arranged on the circumferential wall 411 of the motor container 410 in the circumferential direction C of the drive motor 200. In this way, the first recess 430 can be arranged between the motor control unit container 420 and the second recess 440 in the circumferential direction C of the drive motor 200. This facilitates arrangement of the first recess 430 by using a gap between the motor control unit container 420 and the motor container 410, making a structure of the housing 400 compact. This further facilitates the arrangement of the first recess 430 without excessively occupying space of the housing 400, contributes to the miniaturization of the powertrain 20, and facilitates a layout.

In an embodiment, as shown in FIG. 4, in the radial direction R of the drive motor 200, a depth of the second recess 440 is less than a depth of the first recess 430.

In this embodiment of this application, the motor control unit container 420, the first recess 430, and the second recess 440 are sequentially arranged on the circumferential wall 411 of the motor container 410 in the circumferential direction C of the drive motor 200, and in the radial direction R of the drive motor 200, the depth of the second recess 440 is less than the depth of the first recess 430. In this way, the shallow depth of the second recess 440 allows the powertrain 20 to have a small size in an arrangement direction of the motor control unit container 420 and the second recess 440.

In this embodiment of this application, when the motor control unit container 420 and the second recess 440 are arranged on the two sides of the motor container 410 in the radial direction R of the drive motor 200, the size of the powertrain 20 may increase in the radial direction R of the drive motor 200 at a position at which the motor control unit container 420 and the second recess 440 are arranged. In this case, setting the depth of the second recess 440 to be shallower helps avoid an increase in the size of the powertrain 20 in the arrangement direction of the motor control unit container 420 and the second recess 440.

In this embodiment of this application, the depth of the first recess 430 in the radial direction R of the drive motor 200 is deeper, so that the first recess 430 can accommodate more oil when serving as a part of the first oil cavity 470, which helps design the first oil pan 450 detachably connected to the first recess 430 to be flatter, space of the housing 400 in the radial direction R of the drive motor 200 is not additionally increased during mounting of the first oil pan 450, and the size of the powertrain 20 is small, thereby facilitating the layout of the powertrain 20 in the vehicle.

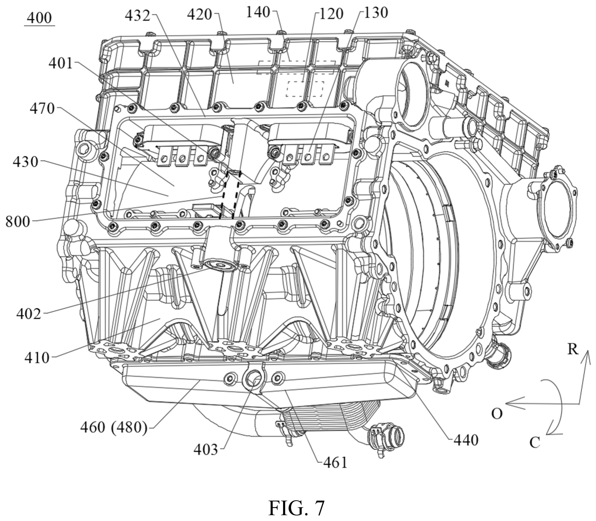

FIG. 7 is another diagram of the housing 400 of the powertrain 20 according to an embodiment of this application.

In an embodiment, as shown in FIG. 4 and FIG. 7, the second oil pan 460 is recessed away from the motor container 410 to form a third recess 461. The third recess 461 is configured to enclose the second recess 440 to form the second oil cavity 480.

In this embodiment of this application, the second oil pan 460 is recessed away from the motor container 410. In this case, the second oil pan 460 increases space of the powertrain 20 in the radial direction R of the drive motor 200. When the first oil cavity 470 serves as the oil storage cavity, the deeper second oil pan 460 can be removed, so that the size of the powertrain 20 in a direction perpendicular to the axial direction O of the drive motor 200 can be smaller, and the layout of the powertrain 20 in the vehicle is optimized.

In this embodiment of this application, the second oil pan 460 is recessed away from the motor container 410 to form a third recess 461, and the third recess 461 is configured to enclose the second recess 440 to form the second oil cavity 480. In this way, when the second oil cavity 480 serves as the oil storage cavity, the third recess 461 can be used to accommodate a larger amount of oil, to ensure that the oil pump 500 can pump enough oil into the housing 400 of the powertrain 20 for cooling and lubrication circulation.

In an embodiment, as shown in FIG. 4 and FIG. 7, in the radial direction R of the drive motor 200, a depth of the third recess 461 is greater than the depth of the second recess 440.

In this embodiment of this application, in the radial direction R of the drive motor 200, the depth of the third recess 461 is greater than the depth of the second recess 440. In this way, when the second oil cavity 480 does not serve as the oil storage cavity, the third recess 461 with the deeper depth can be removed, so that space of the powertrain 20 in the direction perpendicular to the axial direction O of the drive motor 200 can be greatly reduced, the size of the powertrain 20 is smaller, and the layout of the powertrain 20 in the vehicle is optimized.

In this embodiment of this application, the second recess 440 has the shallow depth, so that the second recess 440 does not occupy excessive space of the housing 400 in the radial direction R of the drive motor 200. This helps reduce the size of the powertrain 20.

In an embodiment, as shown in FIG. 4, the first recess 430 includes a first side wall 432 and a second side wall 433. The second recess 440, the second side wall 433, and the first side wall 432 are sequentially arranged in the circumferential direction C of the drive motor 200. The first side wall 432 is configured to form a part of a bottom 422 of the motor control unit container 420.

In this embodiment of this application, as shown in FIG. 3 and FIG. 4, the second recess 440, the second side wall 433, and the first side wall 432 are sequentially arranged in the circumferential direction C of the drive motor 200. The first side wall 432 is configured to form the part of the bottom 422 of the motor control unit container 420. The first side wall 432 of the first recess 430 is reused to form the part of the bottom 422 of the motor control unit container 420, so that the housing 400 of the powertrain 20 is more compactly arranged. When the second oil cavity 480 serves as the oil storage cavity, after the first oil pan 450 is removed, the first recess 430 does not occupy additional space of the housing 400, so that the size of the powertrain 20 is smaller.

In this embodiment of this application, the first side wall 432 is configured to form the part of the bottom 422 of the motor control unit container 420, so that the first recess 430 can further provide support for the motor control unit container 420. This helps improve stability of the housing 400.

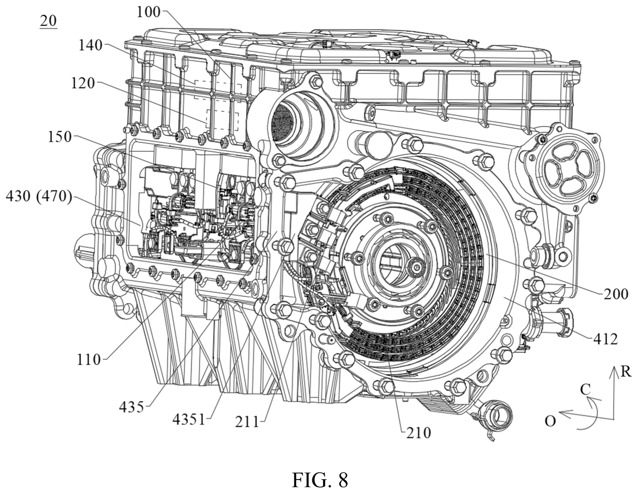

FIG. 8 is another diagram of the powertrain 20 according to an embodiment of this application.

In an embodiment, as shown in FIG. 7 and FIG. 8, the first recess 430 is further configured to accommodate a three-phase wiring component 110. The three-phase wiring component 110 is configured to connect a stator winding 210 of the drive motor 200 to a power module 120 of the motor control unit 100.

In this embodiment of this application, the first recess 430 is further configured to accommodate the three-phase wiring component 110. The first recess 430 is reused to accommodate the three-phase wiring component 110, so that the powertrain 20 is compactly arranged. This further helps reduce the size of the housing 400 and the powertrain 20. When the first oil cavity 470 serves as the oil storage cavity, the three-phase wiring component 110 in the first recess 430 may be immersed in oil to cool the three-phase wiring component 110, so that no separate cooling structure needs to be disposed to dissipate heat for the three-phase wiring component 110. This helps simplify a structural design.

In this embodiment of this application, the three-phase wiring component 110 is configured to connect the stator winding 210 of the drive motor 200 to the power module 120 of the motor control unit 100. The three-phase wiring component 110 may transmit an alternating current output by the power module 120 of the motor control unit 100 to the stator winding 210 of the drive motor 200, to drive the rotor to rotate.

In an embodiment, as shown in FIG. 7 and FIG. 8, the first recess 430 is further configured to accommodate a three-phase connector 211 of the stator winding 210, so that the alternating current transmitted by the three-phase wiring component 110 can be transmitted to the stator winding 210 through the three-phase connector 211, to drive the rotor to rotate. When the first oil cavity 470 serves as the oil storage cavity, the three-phase connector 211 may also be immersed in oil to dissipate heat for the three-phase connector 211, so that no separate cooling structure needs to be disposed to dissipate heat for the three-phase connector 211. This helps simplify the structural design.

In an embodiment, as shown in FIG. 7 and FIG. 8, a third side wall 435 of the first recess 430 that faces an opening 412 of the motor container 410 in the axial direction O of the drive motor 200 includes a cable outlet 4351. The cable outlet 4351 connects the motor container 410 and the first recess 430. The cable outlet 4351 is configured to accommodate the three-phase wiring component 110 and the three-phase connector 211, so that the alternating current output by the power module 120 can be transmitted to the stator winding 210 through the three-phase wiring component 110 and the three-phase connector 211 along a shorter path.

In an embodiment, as shown in FIG. 4, FIG. 7, and FIG. 8, the first side wall 432 includes a three-phase hole 4321. The three-phase hole 4321 connects the first recess 430 and the motor control unit container 420. The three-phase hole 4321 is used for a three-phase copper bar 130 to pass through. The three-phase copper bar 130 is configured to connect the power module 120 to the three-phase wiring component 110.

In this embodiment of this application, the first side wall 432 includes the three-phase hole 4321. The three-phase hole 4321 connects the first recess 430 and the motor control unit container 420. The three-phase hole 4321 is used for the three-phase copper bar 130 to pass through. The first recess 430 is configured to accommodate the three-phase wiring component 110, so that the three-phase copper bar 130 can be connected to the three-phase wiring component 110 in the first recess 430 through a shorter path, thereby improving structural compactness of the powertrain 20. When the first oil cavity 470 serves as the oil storage cavity, a part of the three-phase copper bar 130 extending into the first recess 430 may be directly cooled by oil stored in the first recess 430, so that no separate cooling structure needs to be disposed to dissipate heat for the three-phase copper bar 130. This helps simplify the structural design and contributes to the miniaturization of the powertrain 20.

In this embodiment of this application, the three-phase copper bar 130 is configured to connect the power module 120 to the three-phase wiring component 110. The three-phase copper bar 130 may transmit a three-phase alternating current transmitted by the power module 120 of the motor control unit 100 to the three-phase wiring component 110, and the three-phase wiring component 110 transmits the alternating current to the stator winding 210 of the drive motor 200, to drive the rotor to rotate.

In an embodiment, as shown in FIG. 4, FIG. 7, and FIG. 8, the first side wall 432 includes a signal hole 4322. The signal hole 4322 connects the first recess 430 and the motor control unit container 420. The signal hole 4322 is used for a signal cable 150 to pass through. The signal cable 150 is configured to connect a circuit board 140 of the motor control unit 100 to a resolver (not shown in the figure).

In this embodiment of this application, the first side wall 432 further includes the signal hole 4322. The signal hole 4322 connects the first recess 430 and the motor control unit container 420. The signal hole 4322 is used for the signal cable 150 to pass through, so that both the signal cable 150 and the three-phase copper bar 130 are arranged on the first side wall 432, making wiring of the powertrain 20 compact. This helps improve integration of the powertrain 20 and reduce the size of the powertrain 20.

In this embodiment of this application, the signal cable 150 is configured to connect the circuit board 140 of the motor control unit 100 and the resolver. The resolver may be configured to detect rotational speed information of the rotor of the drive motor 200, and transmit the rotational speed information of the rotor to the circuit board 140 of the motor control unit 100 through the signal cable 150, so that the motor control unit 100 can adjust and control a rotational status of the rotor of the drive motor 200.

In an embodiment, as shown in FIG. 4, in the circumferential direction C of the drive motor 200, a width of the first recess 430 is greater than a width of the second recess 440.

In this embodiment of this application, as shown in FIG. 4 and FIG. 8, in the circumferential direction C of the drive motor 200, the width of the first recess 430 is greater than the width of the second recess 440. The first recess 430 is reused to accommodate the three-phase wiring component 110, and space for accommodating oil in the first recess 430 is occupied, and therefore, the width of the first recess 430 needs to be set larger. When the first oil cavity 470 serves as the oil storage cavity, the size of the first recess 430 is large enough to accommodate enough oil and the three-phase wiring component 110.

In this embodiment of this application, the first side wall 432 of the first recess 430 is configured to form the part of the bottom 422 of the motor control unit container 420, so that the arrangement of the first recess 430 can use large triangular space between the bottom of the motor control unit container 420 and the circumferential wall 411 of the motor container 410 to form a large size without occupying additional space of the housing 400, thereby facilitating setting of a larger width for the first recess 430.

In an embodiment, as shown in FIG. 4, the housing 400 further includes an oil suction hole 401, and the oil suction hole 401 is exposed within the first recess 430. As shown in FIG. 4 and FIG. 6, under an operating condition in which the first oil cavity 470 is configured to communicate with the oil pump 500, the oil suction hole 401 is configured to communicate with the oil pump 500 through the internal flow passage of the housing 400. As shown in FIG. 4 and FIG. 5, under an operating condition in which the second oil cavity 480 is configured to communicate with the oil pump 500, the oil suction hole 401 is configured to communicate with the oil pump 500 through the internal flow passage of the housing 400 and communicate with the second recess 440 through an external pipe 600.

In this embodiment of this application, as shown in FIG. 4 and FIG. 6, under the operating condition in which the first oil cavity 470 is configured to communicate with the oil pump 500, the oil suction hole 401 is configured to communicate with the oil pump 500 through the internal flow passage of the housing 400. The oil suction hole 401 is exposed within the first recess 430. The first recess 430 is configured to detachably connect to the first oil pan 450 to form the first oil cavity 470, so that the oil pump 500 can directly draw in oil from the first oil cavity 470 through the oil suction hole 401 in the first recess 430 and pump oil into the internal flow passage of the housing 400. The oil suction hole 401 is exposed within the first recess 430, so that an oil path is shorter, system oil resistance is reduced, and operating load of the oil pump 500 is reduced.

In this embodiment of this application, as shown in FIG. 4 and FIG. 5, under the operating condition in which the second oil cavity 480 is configured to communicate with the oil pump 500, the oil suction hole 401 is configured to communicate with the oil pump 500 through the internal flow passage of the housing 400 and communicate with the second recess 440 through the external pipe 600, so that oil in the second oil cavity 480 can enter the internal flow passage of the housing 400 through the external pipe 600 and the oil suction hole 401, and then is pumped by the oil pump 500 to the drive motor 200, to cool and lubricate the drive motor 200.

The oil pump 500 in FIG. 4 represents only a schematic position of the oil pump 500, and does not represent a specific structure. For a specific structure, refer to FIG. 5.

In an embodiment, as shown in FIG. 4, in the radial direction R of the drive motor 200, a distance from the oil suction hole 401 to the opening 431 of the first recess 430 is less than a distance from the oil suction hole 401 to an inner wall of the motor container 410.

In this embodiment of this application, in the radial direction R of the drive motor 200, the distance from the oil suction hole 401 to the opening 431 of the first recess 430 is less than the distance from the oil suction hole 401 to the inner wall of the motor container 410, so that the oil suction hole 401 is closer to the opening 431 of the first recess 430. Under the operating condition in which the first oil cavity 470 is configured to communicate with the oil pump 500, the first recess 430 is located at the bottom of the powertrain 20. In this way, the oil suction hole 401 can be located at a lower position of the powertrain 20, so that the oil pump 500 can quickly pump oil in the first recess 430 through the oil suction hole 401 into the internal flow passage of the housing 400 in a timely manner, thereby avoiding oil accumulation in the first recess 430.

In an embodiment, as shown in FIG. 4, in the circumferential direction C of the drive motor 200, the oil suction hole 401 is distributed at a center of the opening 431 of the first recess 430.

In this embodiment of this application, in the circumferential direction C of the drive motor 200, the oil suction hole 401 is distributed at the center of the opening 431 of the first recess 430. In this way, when the powertrain 20 tilts forward and backward, it can be ensured that the oil suction hole 401 can still draw in oil from the first recess 430, thereby preventing the oil pump 500 from dry suction, ensuring normal operation of the powertrain 20, and avoiding a failure of cooling and lubrication system of the powertrain 20.

In an embodiment, as shown in FIG. 4, the housing 400 includes two motor containers 410. Openings 412 of the two motor containers 410 face away from each other in the axial direction O of the drive motor 200. The oil suction hole 401 is equidistant from the openings 412 of the two motor containers 410 in the axial direction O of the drive motor 200. In this way, when the powertrain 20 tilts leftward or rightward, it can be ensured that the oil suction hole 401 can still draw in oil from the first recess 430, thereby preventing the oil pump 500 from dry suction, ensuring normal operation of the powertrain 20, and avoiding the failure of the cooling and lubrication system of the powertrain 20.

In an embodiment, as shown in FIG. 4, a bottom 434 of the first recess 430 further includes an oil suction protrusion 4341. The oil suction protrusion 4341 protrudes toward the opening 431 of the first recess 430. The oil suction hole 401 is provided on the oil suction protrusion 4341.

In this embodiment of this application, the oil suction protrusion 4341 protrudes toward the opening 431 of the first recess 430, and the oil suction hole 401 is provided on the oil suction protrusion 4341, so that the oil suction hole 401 can be closer to the opening 431 of the first recess 430, and the oil suction hole 401 can be arranged at a lower position in a height direction of the powertrain 20. This helps improve efficiency of the oil pump 500 in drawing oil from the oil suction hole 401.

In this embodiment of this application, the oil suction protrusion 4341 further functions as a reinforcement rib. This helps improve structural strength of the housing 400.

In an embodiment, as shown in FIG. 4, the oil suction hole 401 is distributed at one end that is of oil suction protrusion 4341 and that faces the opening 431 of first recess 430.

In an embodiment, as shown in FIG. 7, the housing 400 further includes a first communication hole 402 and a second communication hole 403. The first communication hole 402 and the second communication hole 403 are respectively configured to communicate with the first recess 430 and the second recess 440. As shown in FIG. 5 and FIG. 7, under the operating condition in which the second oil cavity 480 is configured to communicate with the oil pump 500, the second communication hole 403 is further configured to detachably connect to one end 610 of the external pipe 600, and the other end 620 of the external pipe 600 passes through the first communication hole 402 to communicate with the oil suction hole 401.

In this embodiment of this application, as shown in FIG. 5 and FIG. 7, under the operating condition in which the second oil cavity 480 is configured to communicate with the oil pump 500, the second communication hole 403 is further configured to detachably connect to one end 610 of the external pipe 600, and the other end 620 of the external pipe 600 passes through the first communication hole 402 to communicate with the oil suction hole 401. In this way, oil in the second oil cavity 480 can be transferred from the second communication hole 403 to one end 610 of the external pipe 600, and transferred from the other end 620 of the external pipe 600 to the first communication hole 402 to enter the oil suction hole 401, and then enters the internal flow passage of the housing 400.

In this embodiment of this application, the second communication hole 403 is further configured to detachably connect to one end 610 of the external pipe 600, and the other end 620 of the external pipe 600 passes through the first communication hole 402 to communicate with the oil suction hole 401. When the first oil cavity 470 serves as the oil storage cavity, the external pipe 600 can be removed to reduce a size.

In an embodiment, as shown in FIG. 4 and FIG. 6, under the operating condition in which the first oil cavity 470 is configured to communicate with the oil pump 500, the housing 400 further includes an oil drain plug 700. The oil drain plug 700 is configured to block the first communication hole 402, so that oil in the first oil cavity 470 does not leak from the first communication hole 402, thereby ensuring reliability of the powertrain 20 for cooling and lubricating the oil passage.

The oil drain plug 700 in FIG. 4 represents only a schematic position of the oil drain plug 700, and does not represent a specific structure.

In an embodiment, oil in the powertrain 20 may be further discharged by opening the oil drain plug 700, to replace oil in the powertrain 20. In an embodiment, the oil drain plug 700 is threadedly connected to the inside of the first communication hole 402.

In an embodiment, a radial sealing structure between the other end 620 of the external pipe 600 and the first communication hole 402 is the same as a radial sealing structure between the oil drain plug 700 and first communication hole 402, so that the other end 620 of the external pipe 600 can be radially sealed with the first communication hole 402 after the oil drain plug 700 is removed from the first communication hole 402. In other words, the radial sealing structure of the first communication hole 402 can adapt to both the oil drain plug 700 and the other end 620 of the external pipe 600.

In an embodiment, as shown in FIG. 4 and FIG. 5, under the operating condition in which the second oil cavity 480 is configured to communicate with the oil pump 500, one end 610 of the external pipe 600 and the second communication hole 403 are radially sealed. When the first oil cavity 470 serves as the oil storage cavity, after the oil drain plug 700 is removed, the first communication hole 402 can be connected to and end-face sealed with the other end 620 of the external pipe 600. The other end 620 of the external pipe 600 further passes through a threaded hole for placing the oil drain plug 700 and is assembled and radially sealed with the oil suction hole 401, thereby ensuring the reliability of the powertrain 20 for cooling and lubricating the oil passage.

In another embodiment, as shown in FIG. 5 and FIG. 7, the other end 620 of the external pipe 600 communicates with the oil suction hole 401 through an oil guide pipe 800. The oil guide pipe 800 is detachably connected to the other end 620 of the external pipe 600 and the oil suction hole 401. A pipe diameter of the oil guide pipe 800 is the same as a hole diameter of the oil suction hole 401, so that the oil guide pipe 800 can smoothly transfer oil to the oil suction hole 401.

In an embodiment, under the operating condition in which the first oil cavity 470 is configured to communicate with the oil pump 500, when the powertrain 20 is placed in a tilted manner and the oil suction hole 401 cannot be located at a lowest position of the powertrain 20, an oil suction pipe can be mounted at a position of the oil suction hole 401, one end of the oil suction pipe is inserted into the oil suction hole 401, and the other end of the oil suction pipe is located at a lowest position of the first oil cavity 470. In this way, it is ensured that the cooling and lubrication system of the powertrain 20 does not fail. In an embodiment, the oil suction pipe is detachably connected to the oil suction hole 401. A length of the oil suction pipe is adjustable. A pipe diameter of the oil suction pipe is consistent with a pipe diameter of the oil suction hole 401.

In an embodiment, as shown in FIG. 7, the oil suction hole 401, the first communication hole 402, and the second communication hole 403 are sequentially spaced apart in the circumferential direction C of the drive motor 200.

In this embodiment of this application, as shown in FIG. 5 and FIG. 7, the oil suction hole 401, the first communication hole 402, and the second communication hole 403 are sequentially spaced apart in the circumferential direction C of the drive motor 200. In this way, under the operating condition in which the second oil cavity 480 is configured to communicate with the oil pump 500, oil in the second oil cavity 480 can flow in the circumferential direction C of the drive motor 200, making a length of the external pipe 600 shorter. A shorter oil passage helps reduce the system oil resistance and reduce load on the oil pump 500. It further facilitates a connection of the oil suction hole 401, the first communication hole 402, and the second communication hole 403 through the external pipe 600, mounting of the external pipe 600, and more compact arrangement between the external pipe 600 and the housing 400.

In an embodiment, as shown in FIG. 3 and FIG. 4, the first communication hole 402 is distributed on a part of a wall of the first recess 430 forming the first oil cavity 470 or distributed on the first oil pan 450, and the second communication hole 403 is distributed on a part of a wall of the second recess 440 forming the second oil cavity 480 or distributed on the second oil pan 460.

In this embodiment of this application, as shown in FIG. 4 and FIG. 5, the first communication hole 402 is distributed on the part of the wall of the first recess 430 forming the first oil cavity 470. In this way, when the first communication hole 402 is connected to the other end 620 of the external pipe 600, the external pipe 600 can be arranged closer to the housing 400, thereby making the arrangement between the external pipe 600 and the housing 400 more compact.

In this embodiment of this application, the first communication hole 402 is distributed on the first oil pan 450 forming the first oil cavity 470, so that the other end 620 of the external pipe 600 is more smoothly connected to the first communication hole 402.

In this embodiment of this application, the second communication hole 403 is distributed on the part of the wall of the second recess 440 forming the second oil cavity 480. In this way, when the second communication hole 403 is connected to one end 610 of the external pipe 600, the external pipe 600 is arranged closer to the housing 400, thereby making the arrangement between the external pipe 600 and the housing 400 more compact.

In this embodiment of this application, the second communication hole 403 is distributed on the second oil pan 460 forming the second oil cavity 480, so that one end 610 of the external pipe 600 is more smoothly connected to the second communication hole 403.

In an embodiment, as shown in FIG. 7, the first communication hole 402 is distributed on the second side wall 433 of the first recess 430 forming the first oil cavity 470, and the second communication hole 403 is distributed on the second oil pan 460 forming the second oil cavity 480.

In an embodiment, as shown in FIG. 4 and FIG. 6, the housing 400 further includes a first oil return hole 404. The first oil return hole 404 penetrates the bottom 434 of the first recess 430. The first oil return hole 404 is configured to connect the first recess 430 and the motor container 410. Under the operating condition in which the first oil cavity 470 is configured to communicate with the oil pump 500, the first oil cavity 470 is located at the bottom of the powertrain 20, and the first oil return hole 404 is located at a position close to a bottom of the motor container 410, so that oil in the motor container 410 can quickly flow back from the first oil return hole 404 to the first oil cavity 470.

In an embodiment, as shown in FIG. 4 and FIG. 5, the housing 400 further includes a plurality of second oil return holes 405. The second oil return hole 405 penetrates a bottom 442 of the second recess 440. The second oil return hole 405 is configured to connect the second recess 440 and the motor container 410. Under the operating condition in which the second oil cavity 480 is configured to communicate with the oil pump 500, the second oil cavity 480 is located at the bottom of the powertrain 20, and the second oil return hole 405 is located at a position close to the bottom and the opening 412 of the motor container 410, so that oil in the motor container 410 can quickly flow back from the second oil return hole 405 to the second oil cavity 480.

In an embodiment, when the first oil cavity 470 is located at the bottom of the powertrain 20 and serves as the oil storage cavity, the second oil pan 460 is removed, and a flat cover plate is fastened to and covers the second recess 440, so that oil in the motor container 410 can be prevented from leaking after entering the second recess 440 through the second oil return hole 405. In addition, the flat cover plate does not additionally increase the size of the powertrain 20. This contributes to the miniaturization of the powertrain 20.

In an embodiment, as shown in FIG. 3 to FIG. 6, the powertrain 20 further includes a reducer 300, a filter 900, and a heat exchanger 1100. Oil drawn into the oil pump 500 through the oil suction hole 401 flows sequentially through the filter 900 and the heat exchanger 1100 via the internal flow passage of the housing 400. The filter 900 is configured to remove contaminants from oil. The heat exchanger 1100 is configured to exchange heat with oil. Oil transferred from the heat exchanger 1100 is further transferred to the drive motor 200 and the reducer 300 to cool and lubricate the drive motor 200 and the reducer 300, and then flows back to the first oil cavity 470 or the second oil cavity 480 through the first oil return hole 404 or the second oil return hole 405, thereby implementing the circulation of the oil. The oil pump 500, the filter 900, and the heat exchanger 1100 are disposed around an outer side wall of the motor container 410 in the circumferential direction C of the drive motor 200, so that the oil pump 500, the filter 900, and the heat exchanger 1100 do not occupy excessive circumferential space of the powertrain 20.

In addition, the reducer 300 in this embodiment of this application is the planetary reducer 300. In comparison with a parallel shaft reducer, the planetary reducer 300 has a small difference in radial lengths at various angles in a circumferential direction, and the planetary reducer 300 is approximately circular. Therefore, two oil cavities, namely the first oil cavity 470 and the second oil cavity 480, increase the size of the powertrain 20 in a radial direction. In this application, the motor control unit container 420, the first recess 430, and the second recess 440 are disposed in the circumferential direction C of the drive motor 200, and the first oil pan 450 and the second oil pan 460 are detachably connected to the first recess 430 and the second recess 440 to form the first oil cavity 470 and the second oil cavity 480. In this way, when one of the oil cavities serves as the oil storage cavity, an oil pan of the other oil cavity can be removed, so that a radial size of the powertrain 20 can be reduced when one of the oil cavities serves as the oil storage cavity.

In an embodiment, as shown in FIG. 5, when the powertrain 20 is arranged in the front-wheel-drive layout, the front of the electric vehicle 1 has a cockpit, and a size of the powertrain 20 in a horizontal direction perpendicular to the axial direction O of the powertrain 20 needs to be small, and a size of the powertrain 20 in a front-rear direction of the electric vehicle 1 needs to be small. Therefore, the motor control unit container 420 and the second recess 440 are oppositely arranged in a height direction of the electric vehicle 1, and the second recess 440 is arranged at the bottom of the powertrain 20. The second oil cavity 480 serves as the oil storage cavity. The second oil pan 460 with the deeper depth may be arranged at the bottom of the powertrain 20 by using a vehicle gap, without affecting a layout of the cockpit. The first recess 430 is arranged in the horizontal direction perpendicular to the axial direction O of the powertrain 20. The first recess 430 is formed by using a gap between the motor control unit container 420 and the motor container 410. The first recess 430 does not additionally increase a size of the motor control unit container 420 in the horizontal direction perpendicular to the axial direction O of the powertrain 20, and the first oil pan 450 is of a flat structure, so that the size of the powertrain 20 in the horizontal direction perpendicular to the axial direction O of the powertrain 20 is small, and more space can be reserved for the layout of the cockpit.

As shown in FIG. 6, when the powertrain 20 is arranged in the rear-wheel-drive layout, the rear of the electric vehicle 1 has a trunk, and the size of the powertrain 20 needs to be small in a height direction after the powertrain 20 is arranged. Therefore, the first oil cavity 470 serves as the oil storage cavity, and a stacking direction of the motor container 410 and the motor control unit container 420 are arranged in a horizontal direction or in the front-rear direction of the electric vehicle 1. The first recess 430 is formed by using space between the motor control unit container 420 and the motor container 410. The first recess 430 does not increase space of the housing 400 and the powertrain 20 in the height direction of the powertrain 20, and the first oil pan 450 is of the flat structure, so that space of the powertrain 20 in the height direction of the powertrain 20 does not increase. In addition, the second oil cavity 480 is arranged in the horizontal direction perpendicular to the axial direction O of the powertrain 20, and the second oil pan 460 can be removed without excessively increasing space of the powertrain 20 in the horizontal direction or a front-rear direction, so that more space can be reserved for a layout of the trunk.

The powertrain and the electric vehicle provided in embodiments of this application are described in detail above. The principles and embodiments in this application are described in this specification by using specific examples. The descriptions about embodiments are merely provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A powertrain, wherein a housing of the powertrain comprises a motor container, a motor control unit container, a first recess, and a second recess, the motor container is configured to accommodate a stator and a rotor of a drive motor, and the motor control unit container is configured to accommodate a functional component of a motor control unit; and
the motor control unit container, the first recess, and the second recess are sequentially arranged on a circumferential wall of the motor container in a circumferential direction of the drive motor, an orientation of an opening of the motor control unit container, an orientation of an opening of the first recess, and an orientation of an opening of the second recess face away from an inner cavity of the motor container, the first recess and the second recess are respectively configured to detachably connect to a first oil pan and a second oil pan to form a first oil cavity and a second oil cavity, and the first oil cavity and the second oil cavity are configured to connect the motor container and an oil pump when the powertrain is located at different circumferential positions.

2. The powertrain according to claim 1, wherein the motor control unit container and the second recess are arranged on two sides of the motor container in a radial direction of the drive motor.

3. The powertrain according to claim 1 or 2, wherein in the radial direction of the drive motor, a depth of the second recess is less than a depth of the first recess.

4. The powertrain according to any one of claims 1 to 3, wherein the second oil pan is recessed away from the motor container to form a third recess, and the third recess is configured to enclose the second recess to form the second oil cavity.

5. The powertrain according to claim 4, wherein in the radial direction of the drive motor, a depth of the third recess is greater than the depth of the second recess.

6. The powertrain according to any one of claims 1 to 5, wherein the first recess comprises a first side wall and a second side wall, the second recess, the second side wall, and the first side wall are sequentially arranged in the circumferential direction of the drive motor, and the first side wall is configured to form a part of a bottom of the motor control unit container.

7. The powertrain according to claim 6, wherein the first recess is further configured to accommodate a three-phase wiring component, and the three-phase wiring component is configured to connect a stator winding of the drive motor to a power module of the motor control unit.

8. The powertrain according to claim 7, wherein the first side wall comprises a three-phase hole, the three-phase hole communicates the first recess with the motor control unit container, the three-phase hole is used for a three-phase copper bar to pass through, and the three-phase copper bar is configured to connect the power module to the three-phase wiring component.

9. The powertrain according to claim 7, wherein in the circumferential direction of the drive motor, a width of the first recess is greater than a width of the second recess.

10. The powertrain according to any one of claims 1 to 9, wherein the housing further comprises an oil suction hole, and the oil suction hole is exposed within the first recess;
under an operating condition in which the first oil cavity is configured to communicate with the oil pump, the oil suction hole is configured to communicate with the oil pump through an internal flow passage of the housing; and
under an operating condition in which the second oil cavity is configured to communicate with the oil pump, the oil suction hole is configured to communicate with the oil pump through the internal flow passage of the housing and communicate with the second recess through an external pipe.

11. The powertrain according to claim 10, wherein a bottom of the first recess further comprises an oil suction protrusion, the oil suction protrusion protrudes toward the opening of the first recess, and the oil suction hole is provided on the oil suction protrusion.

12. The powertrain according to claim 10, wherein the housing further comprises a first communication hole and a second communication hole, and the first communication hole and the second communication hole are respectively configured to communicate with the first recess and the second recess; and
under the operating condition in which the second oil cavity is configured to communicate with the oil pump, the second communication hole is further configured to detachably connect to one end of the external pipe, and the other end of the external pipe passes through the first communication hole to communicate with the oil suction hole.

13. The powertrain according to claim 12, wherein the oil suction hole, the first communication hole, and the second communication hole are sequentially spaced apart in the circumferential direction of the drive motor.

14. The powertrain according to claim 12, wherein the first communication hole is distributed on a part of a wall of the first recess forming the first oil cavity or distributed on the first oil pan, and the second communication hole is distributed on a part of a wall of the second recess forming the second oil cavity or distributed on the second oil pan.

15. An electric vehicle, wherein the electric vehicle comprises a vehicle frame and the powertrain according to any one of claims 1 to 14, the vehicle frame is configured to fasten the powertrain, and a drive motor of the powertrain is configured to receive power supplied by a power battery to drive a wheel.
